(19) Europäisches Patentamt
European Patent Office
Office européen des brevets

(11) Veröffentlichungsnummer: 0 003 294
B1

(12) # EUROPÄISCHE PATENTSCHRIFT

(21) Anmeldenummer: 79100085.4

(22) Anmeldetag: 12.01.79

(51) Int. Cl.³: G 02 B 1/04, B 29 D 11/00, C 08 G 3/12, C 08 G 63/68

(54) Verwendung von aromatischen Polyestern für optische Linsen

(30) Priorität: 24.01.78 DE 2802978

(43) Veröffentlichungstag der Anmeldung: 08.08.79 Patentblatt 79/16

(45) Bekanntmachung des Hinweises auf die Patenterteilung: 15.10.80 Patentblatt 80/21

(84) Benannte Vertragsstaaten: DE FR GB IT

(56) Entgegenhaltungen:
AT - B - 335 723
US - A - 3 513 224

(73) Patentinhaber: BAYER AG
Zentralbereich Patente, Marken und Lizenzen
D - 5090 Leverkusen 1, Bayerwerk
DE

(72) Erfinder: Medem, Harald, Dr.
Buschstrasse 167
D - 4150 Krefeld (DE)
Freitag, Dieter, Dr.
Hasenheide, 10
D - 4150 Krefeld (DE)
Hespe, Hans, Dr.
Walter-Flex-Strasse 14
D - 5090 Leverkusen (DE)
Heynemann, Carl, Dipl.-Ing.
Flurweg 15
D - 8021 Taufkirchen (DE)

EP 0 003 294 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verwendung von aromatischen Polyestern für optische Linsen

Die Erfindung betrifft die Verwendung von aromatischen Polyestern für die Herstellung optischer Linsen für Photo- und Filmkameras. Man hat bereits optische Systeme, z.B. Linsen für photographische Kameras, aus durchsichtigen Kunststoffen hergestellt. Praktische Bedeutung haben nur thermoplastische Kunststoffe erlangt, weil sie sich rationell und erheblich besser als Glas verarbeiten lassen. So dient beispielsweise Polymethylmethacrylat als Ersatz für niedrigbrechende Silikatgläser. Auch Polystyrol, Copolymerisate des Styrols sowie Bisphenol-A-Polycarbonat werden, vorwiegend für Zerstreuungslinsen, eingesetzt.

Die genannten Kunststoffe können nur verwendet werden für

a) mehrlinsige Objektive vollständig aus Kunststofflinsen) mit einem relativen Öffnungsverhältnis von maximal 1:8, einem maximalen Zerstreuungskreis bis zu 0,04 mm, gemassen bei 23°C und 50% relativer Feuchte, une einem Temperatur-Koeffizienten der Brennweite

$$\frac{\delta f}{\delta \vartheta} \rightarrow 0{,}008 \frac{mm}{grd}$$

b) mehrlinsige Objektive mit mindestens einer Glas- und 2 bis 4 Kunststofflinsen mit einem relativen Öffnungsverhältnis von maximal 1:5,6, einem maximalen Zerstreuungskreis bis zu 0,04 mm, gemessen bei 23°C und 50% relativer Feuchte und einem Temperatur-Koeffizienten der Brennweite

$$\frac{\delta f}{\delta \vartheta} \rightarrow 0{,}002 \frac{mm}{grd}$$

Diese Objektive können wegen ihrer geringen Lichtstärke nur bei günstigen Lichtverhältnissen benutzt werden.

Es sind weiterhin Polymere bekannt, die einen Brechungsindex $n_d$ von über 1,59 besitzen, wie z.B. Polycarbodiimide, Polybenzimidazole, Polyvinylcarbazol und spezielle Polycarbonate. Diese Kunststoffe können für optische Geräte nicht eingesetzt werden, weil sie entweder eine Eigenfarbe aufweisen, nicht thermoplastisch verarbeitet oder nicht hochmolekular hergestellt werden können.

Aus der US 3 513 224 ist die Verwendung von ungesättigten Polyesterharzen für die Herstellung optischer Linsen mit Brechungsindices > 1.5 (Sp. 1, Z.34) bekannt; ihre optischen Eigenschaften sollen sich denen optischer Qualitätsgläser nähern (Sp. 1, Z.35). Diese Polyesterharze sind keine thermoplastischen Materialien, sondern müssen — wie den Beispielen der US 3 513 224 entnommen werden kann — in Formen gegossen und durch Erhitzen gehärtet werden, wofür Reaktionszeiten bis zu mehr als 16 Stunden benötigt werden (Beispiel 1).

Demegegenüber gestattet die vorliegende Erfindung eine einfache und wirtschaftliche Herstellung optischer Linsen mit höherem Brechungsindex mittels thermoplastischer Verarbeitung, z.B. Spritzguß.

Gegenstand der Erfindung ist die Verwendung von thermoplastischen aromatischen Polyestern mit relativen Viskositäten $\eta_{rel}$ von 1,18 bis 1,42 (gemessen bei 25°C in $CH_2Cl_2$, c = 5 g/l) aus Struktureinheiten der Formel

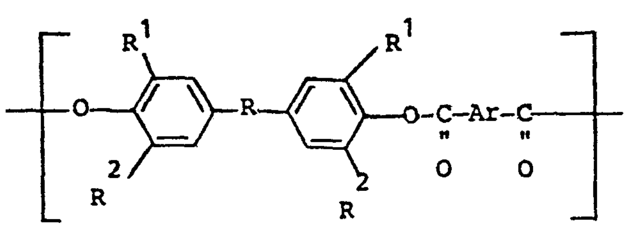

worin

R die Gruppe

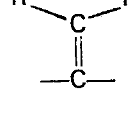

ein Sauerstoffatom, eine Carbonyl- oder Sulfongruppe, eine Einfachbindung, vorzugsweise aber

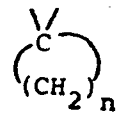

besonders bevorzugt ein Schweflatom oder

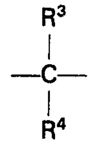

$R^1$, $R^2$ ein Chloratom oder eine Methylgruppe, vorzugsweise ein Wasserstoff- oder Bromatom,
$R^3$, $R^4$ ein Wasserstoffatom, einen Alkylrest mit 1 bis 6 Kohlenstoffatom, vorzugsweise Methyl oder Isopropyl oder einem Arylrest mit 5 bis 12 Kohlenstoffatomen, vorzugsweise Phenyl,
n eine ganze Zahl von 4 bis 11

Ar 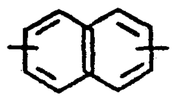 , 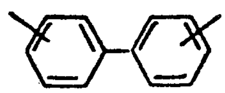 , 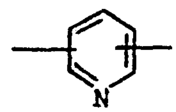 ,

vorzugsweise 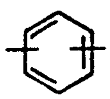

insbesondere 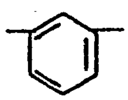 und 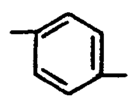

im Molverhältnis (30—70): (70—30), speziell etwa 1:1, bedeuten, für die Herstellung optischer Linsen mit Brechungsindices $n_d > 1,6$ für Photo- und Fimkameras.

Den erfindungsgemäß zu verwendenden aromatsichen Polyestern können ein oder mehrere der folgenden Diphenole zugrunde liegen:

4,4'-Dihydroxydiphenyl,
2,2-Bis-(4-hydroxyphenyl)-methan
4,4'-Dihydroxy-tetraphenyl-methan
2,2-Bis-(4-hydroxyphenyl)-propan (Bisphenol A)
2,2-Bis-(3,5-dimethyl-4-hydroxyphenyl)-propan
2,2-Bis-(3,5-dibrom-4-hydroxyphenyl)-propan (Tetrabrombisphenol A)
2,2-Bis-(3,5-dibrom-4-hydroxyphenyl)-propan
1,1-Bis-(4-hydroxyphenyl)-isobutan
1,1-Bis-(4-hydroxyphenyl)-cyclohexan
1,1-Bis-(4-hydroxyphenyl)-2,2-dichlor-äthylen
4,4'-Dihydroxy-diphenylsulfid (Bisphenol S)
4,4'-Dihydroxy-diphenylsulfon
4,4'-Dihydroxy-diphenyläther
4,4'-Dihydroxy-diphenylketon

sowie weitere Bisphenole, wie sie z.B. in der Monographie "H. Schnell, Chemistry and Physics of Polycarbonates, Interscience Publishers, New York, 1964" beschrieben werden.

Als den Polyestern zugrunde liegende Dicarbonsäuren sind geeignet Benzol-, Naphthalin-, Pyridin- und Diphenyldicarbonsäuren; bevorzugt sind Benzol-1,3-dicarbonsäure (Isophthalsäure), Benzol-1,4-dicarbonsäure (Terephthalsäure), Naphthalin-2,6-dicarbonsäure, Pyridin-2,5-dicaronsäure, Diphenyl-4,4-dicarbonsäure;
besonders bevorzugt sind Gemische von Isophthalsäure und Terephthalsäure im Molverhältnis (30—70):(70—30).

Die erfindungsgemäßen Polyester bestehen überwiegend, bevorzugt jedoch ausschließlich aus Struktureinheiten, die aus mindestens einem der angeführten Bisphenole und mindestens einer der angeführten Dicarbonsäuren aufgebaut sind und der oben angegebenen Formel entsprechen. Die Polyester können weiterhin geringe Anteile von Struktureinheiten enthalten, die aus aliphatischen Diolen anstelle von Bisphenolen oder aliphatischen Dicarbonsäuren oder Kohlensäure anstelle von aromatischen Dicarbonsäuren aufgebaut sind.

Die Polymerketten der aromatischen Polyester werden in der Regel begrenzt durch gegebenenfalls substituierte Phenyloder Benzoyl-Reste. Der Gehalt freier Carboxyl- und Hydroxyl-Endgruppen ist sehr gering.

Die aromatischen Polyester sollen in der Regel mittlere Gewichtsmittel-Molekulargewichte Mw von 10 000 bis über 100 000, vorzugsweise von 15 000 bis etwa 50 000, ermittelt durch die Streulicht-Methode, besitzen.

Diese Polyester besitzen einen Brechungsindex $n_d$ von 1,60—1,66, bevorzugt 1,61—1,66, eine Abbé-Zahl $v_d$ von 27—21, bevorzugt 25—21 und ein Farb-Tripel von etwa 5,1; 0,1; 0, berechnet nach DIN 4522, Teil 5. Die erfindungsgemäß zu verwendenden aromatischen Polyester haben die oben geschilderten Mängel nicht, so daß aus ihnen optische Systeme hergestellt werden können, die gegenüber dem Stand der Technik bemerkenswerte Vorteile aufweisen:

1. Bressere Korrigierbarkeit der Abbildungsfehler bei grösseren Radien für die Linsenflächen (Erleichterung der Herstellung).
2. Erhöhung des relativen Offnungsverhältnisses bei unverändertem Zerstreuungskreis.
3. Verbesserte Auflösung durch Verkleinerung des Zerstreuungskreises bei unverändertem relativen Öffnungsverhältnis.
4. Verringerung des Temperatur-Koeffizienten bei nur mit Kunststofflinsen und bei mit Glas- und Kunststofflinsen bestückten Objektiven.
5. Herstellung von Linsensystemen mit relativen Offnungsverhältnissen über 1:8 nur aus Kunststofflinsen.

Die erfindungsgemäß zu verwendenden Polyester erfüllen die mechanischen und thermischen Anforderungen, die an einen optischen Werkstoff gestellt werden in hervorragender Weise. Sie sind ohne Beeinträchtigung der mechanischen und optischen Eigenschaften thermoplastisch verarbeitbar. Sie sind wärmeformbeständig bis mindestens 100°C, besitzen gute Schlagzähigkeit, geringe Verarbeitungsschwindung, geringe Ausdehnungskoeffizienten, geringes Gewicht, geringe Wasseraufnahme, gutes Fließverhalten, leichte Entformbarkeit, gute Alterungsbeständigkeit sowie ein Farb-Tripel von etwa, 5,1; 0,1;0, berechneit nach DIN 4522, Teil 5. Stabilisatoren, UV-Absorber, Entformungsmittel und Antistatika können ohne Beeinträchtigung dieser Eigenschaften eingearbeitet werden.

Die Polyester können nach bekannt Verfahren hergestellt werden, so z.B. nach dem Schmelzumesterungsverfahren aus Bisphenol und dem entsprechenden Dicarbonsäurediphenylester, nach dem Lösungsverfahren in hochsiedenden Lösungsmitteln aus Bisphenol und dem entsprechenden Dicarbonsäuredihalogenid oder nach dem Zweiphasengrenzflächenverfahren, das im all-gemeinen bevorzugt ist und nachstehend kurz erläutert wird.

Geeignete Grenzflächen-Polykondensationsverfahren sind z.B. von W. M. Eareckson in J. Polym. Sci.*XL*, 399 (1959) sowie in der FR—PS 1.177.517 und der US—PS 3.234.167 beschrieben. Hierbei werden die Reaktionsteilnehmer in miteinander nicht mischbaren Lösungmitteln gelöst, und die Umsetzung erfolgt an der Grenzfläche der Lösungsmittel. Man verfährt vorteilhafterweise so, daß man unter intensivem Rühren eine wäßrige alkalische Lösung eines Bisphenols und eine Lösung aromatischer Dicarbonsäuredihalogenide in einem organischen Lösungsmittel aufeinander einwirken läßt. Es ist zweckmäßig, die Menge des Bisphenols und der Dicarbonsäuredihalogenide äquivalent zu halten; gegebenenfalls können als Kettenbegrenzer monofunktionelle Hydroxyverbindungen, wie z.B. Phenol, o-Phenylphenyl und p-tert.-Butylphenol oder Säurehalogenide zugegeben werden.

Im allgemeinen ist die Anwesenheit von sogenannten Phasentransfer-Katalysatoren vorteilhafter. Als solche haben sich tertiäre Ammonium-, Phosphonium-, Arsonium- und Sulfoniumsalze und neuerdings auch Kronenäther bewährt. Bevorzugt finden Triäthylbenzylammoniumchlorid und Triphenyloctylphosphoniumbromid Verwendung. Bevorzugte Alkalien sind Natriumund Kaliumhydroxid, die in einem geringen Überschuß, bezogen auf das Bisphenol, eingesetzt werden. Als organische Lösungsmittel werden solche bevorzugt, die die gebildeten Polyester zu lösen vermögen. Allgemein werden dazu halogenierte Kohlenwasserstoffe verwendet; besonders bevorzugt sind Methylendichlorid und Chlorbenzol. Ferner können dem Reaktionsgemisch Dispergiermittel, z.B. Natriumlaurylsulfat und Antioxidantien, z.B. Natriumbisulfit, zugesetzt werden.

Die Grenzflächenkondensation wird bei Temperaturen zwischen —20 und +80°C, vorzugsweise zwischen 0 und +25°C, und bei normalem Druck durchgeführt und ist in etwa 1 bis 3 Stunden beendet. Die so hergestellten aromatischen Polyester kann man nach bekannten Verfahren isolieren, z.B., indem man die wäßrige Phase abtrennt, die organische Phase mehrmals mit Wasser wäscht und danach den Polyester ausfällt oder das Lösungsmittel abdampff. Die so gewonnen Polyester enthalten keine Anteile an verseifbarem Chlor.

Die Ausbeuten sind nahezu quantitativ.

Die Polyester können durch den Einbau geringer Mengen, vorzugsweise von Mengen zwischen 0,05

und 2,0 Mol-% (bezogen auf eingesetzte Bisphenole), drei- oder mehr als dreifunktioneller Verbindungen, insbesondere solcher mit drei oder mehr als drei phenolischen Hydroxygruppen, verzweigt sein.

Ein besonders wesentlicher Vorteil der erfindungsgemäß zu verwendenden aromatischen Polyester ist, daß man Brechungsindex und optische Dispersion der Materialien in gewissen Grenzen frei bestimmen kann, wenn man durch Kondensation verschiedener Monomerer Copolyester herstellt.

Dabei führt allgemein die Verwendung von Comonomeren mit einem niedrigen Gehalt an Alkylresten und/oder einem hohen Gehalt an Brom-, Schwefelatomen oder aromatischen Resten zu höheren Brechungsindices.

Aus den erfindungsgemäß zu verwendenden aromatischen Polyestern lassen sich optische Systeme durch Spritzbuß in üblicher Weise herstellen. Die erhaltenen Spritzgußkörper sind ohne weitere Bearbeitung einsetzbar.

Beispiel 1

Aromatischer Polyester aus Bisphenol A

Unter Stickstoffatmosphäre werden in 40 l Wasser vorgelegt:680 g (17 Mol) NaOH, 1826, 4 g (8 Mol) Bisphenol A, 40 g Triäthylbenzylammoniumchlorid, 6 g Natriumborhydrid, 36 g (0.24 Mol) p-tert.-Butylphenol. 30 l $CH_2Cl_2$ werden zugesetzt. Bei 20°C wird innerhalb von 15 Minuten eine Lösung von 812,2 g (4 Mol) Isophtalsäuredichlorid und 812,2 g (4 Mol) Terephthalsäuredichlorid in 5 l $CH_2Cl_2$ zugetropft. Nach 60 Minuten Nachrühren und Ansäuern mit verdünnter Phosphorsäure werden die Phasen getrennt, die organische Phase wird mit Wasser gewaschen und eingedampft. Nach Zugabe eines Hitzestabilisators wird der Polyester bei 270°C extrudiert. Man erhält 2420 g klares farbloses Granulat mit einer relativen Viskosität von 1,25 (gemessen in $CH_2Cl_2$ bei 25°C = 5 g/l).

Das Granulat wird zu Normkleinstäben verspritzt. Es werden folgende Eigenschaften bestimmt:

| | |
|---|---|
| Schlagzähigkeit: | nicht gebrochen |
| Kerbschlagzähigkeit: | 8,9 kJ/m² |
| Härte: | 109 MPa |
| Zug-E-Modul: | 2270 MPa |
| Vicat B: | 177°C |
| Brechungsindex $n_d$: | 1,6101 |
| Abbé Zahl $v_d$: | 24,8 |

Beispiel 2

Aromatischer Copolyester aus Bisphenol A und Tetrabrombisphenol A

Unter Stickstoffatmosphäre werden in 2,0 l Wasser vorgelegt:

17 g (0,425 Mol) NaOH, 36.48 g (0,16 Mol) Bisphenol A, 21,9 g (0,04 Mol) Tetrabromobisphenol A, 1 g $Na_2S_21O_4$, 1,5 g Triphenyloctylphosphoniumbromid, 0,6 g p-tert.-Butylphenol. Nach Zugabe von 1,5 l $CH_2Cl_2$ wird innerhalb von 15 Minuten bei 20°C eine Lösung von 20,3 g Terephthalsäuredichlorid und 20,3 g Isophthalsäuredichlorid in 500 ml $CH_2Cl_2$ zugetropft. Nach 60 Minuten Nachrühren wird angesäuert, die Phasen werden abgetrennt und die organische Phase wird mit Wasser gewaschen. Das Lösungsmittel wird abgezogen. Man erhält 77 g farbloses Produkt mit einer relativen Viskosität von 1,30. Die optischen Daten, gemessen an einem Film, ergeben: $n_d$ = 1,6205 und $v_d$ = 24,1.

Beispiel 3

Aromatischer Polyester aus Tetrabrombisphenol A

Man verfährt wie in Beispiel 2 mit dem Unterschied, daß als bisphenolische Komponente 109, 5 g (0,2 Mol) Tetrabrombisphenol eingesetzt werden. Man erhält 124 g farbloses Produkt mit einer relativen Viskosität von 1,26. Die optischen Daten, gemessen an einem Film, ergeben: $n_d$ = 1,6329 und $v_d$ = 24,4.

Beispiel 4

Aromatischer Copolyester aus Bisphenol A und 1,1-Bis-(4-hydroxyphenyl)-cyclohexan

Man verfährt wie in Beispiel 2 mit dem Unterschied, daß als bisphenolische Komponenten 11,4 g (0,05 Mol) Bisphenol A und 40,2 g (0,15 Mol) 1,1-Bis-(4-hydroxyhenyl)-cyclohexan eingesetzt werden. Man erhält 68 g farbloses Produkt mit einer relativen Viskosität von 1,42. Die optischen Daten, gemessen an einem Film, ergeben: $n_d$ = 1,60556 und $v_d$ = 25,5.

Beispiel 5

Aromatischer Poyester aus 4,4'-Dihydroxy-tetraphenylmethan

Unter Stickstoffatmosphäre werden in 2000 ml Wasser vorgelegt: 17 g (0,425 Mol) NaOH, 70,4 g (0,2 Mol) 4,4'-Dihydroxytetraphenylmethan, 1 g $NaBH_4$, 1,2 g N,N'-Dioctyl-triäthylendiammoniumdibromid, 0,5 g o-Hydroxybiphenyl. Nach Zugabe von 1,5 l $CH_2Cl_2$ wird innerhalb von 15 Minuten bei 20°C eine Lösung von 24,36 g (0,12 Mol) Isophthalsäuredichlorid und 16,24 g (0,08 Mol) Terephthalsäuredichlorid in 500 ml $CH_2Cl_2$ zugetropft.

Nach 60 Minuten Nachrühren wird angesäuert, die Phasen werden getrennt und die organische Phase wird mit Wasser gewaschen. Das Lösungsmittel wird abgezogen. Man erhält 81 g farbloses Produkt mit einer relativen Viskosität von 1,29. Die optischen Daten, gemessen an einem Film, ergeben: $n_d$ = 1,6403 und $v_d$ = 23.

Beispiel 6

Aromatischer Copolyester aus Bisphenol A und Bisphenol S[x)]

Man verfährt wie in Beispiel 1 mit dem Unterschied, daß als bisphenolische Komponenten eine Mischung aus 1095,8 g (4,8 Mol) bisphenol A und 698,3 g (3,2 Mol) Bisphenol S eingesetzt werden. Man erhält 2380 g klares farbloses Granulat mit einer relativen Viskosität von 1,23. Die optischen Daten, gemessen an Rundplatten (30 × 2,5 mm), ergeben: $n_d$ = 1,6268 und $v_d$ = 22,8.

x) Bisphenol S = 4,4'-Thiodiphenol, 4,4'-Dihydroxydiphenylsulfid

**Patentanspruch**

Verwendung von thermoplastischen aromatischen Polyestern mit relativen Viskositäten $\eta_{rel}$ von 1,18 bis 1,42 (gemessen bei 25°C in $CH_2Cl_2$, c = 5 g/l) aus Struktureinheiten der Formel

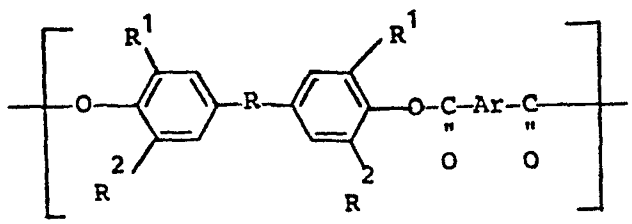

worin

R die Gruppe

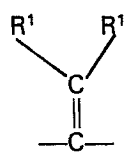

ein Saurestoffatom, eine Carbonyl- oder Sulfongruppe, eine Einfachbindung, vorzugsweise aber

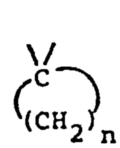

besonders bevorzugt ein Schwefelatom oder

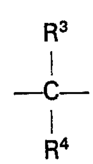

$R^1$, $R^2$ ein Chloratom oder eine Methylgruppe, vorzugsweise ein Wasserstoff- oder Bromatom,

$R^3$, $R^4$ ein Wasserstoffatom, einen Alkylrest mit 1 bis 6 Kohlenstoffatomen, vorzugsweise Methyl oder Isopropyl, oder einen Arylrest mit 5 bis 12 Kohlenstoffatomen, vorzugsweise Phenyl,

n eine ganz Zahl von 4 bis 11 und

Ar 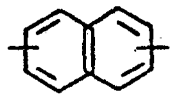 , 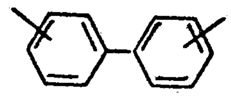 , 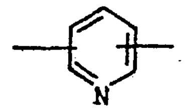 ,

vorzugsweise 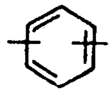

insbesondere 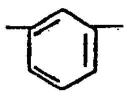 und 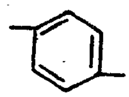

im Molverhältnis (30—70):(70—30), speziell etwa 1:1, bedeuten, für die Herstellung optischer Linsen mit Brechungsindices $n_d > 1{,}6$ für Photo- und Filmkameras.

**Claim**

The use of thermoplastic aromatic polyesters with relative viscosities $\eta_{rel}$ of from 1.18 to 1.42 (as measured at 25°C in $CH_2Cl_2$, C = 5 g/l) comprising structural units of the formula

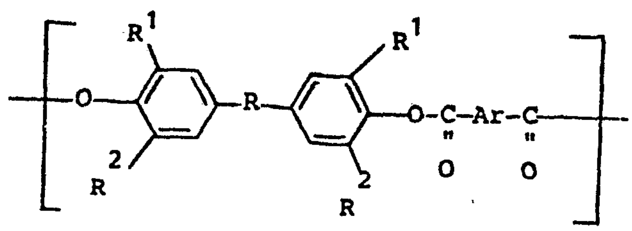

wherein

R represents the group 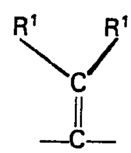

an oxygen atom, a carbonyl or sulphonyl group, a single bond, but preferably

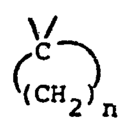

with a particular preference a sulphur atom or

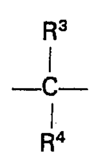

$R_1$ and $R_4$ represent a chlorine atom or a methyl group, preferably a hydrogen or bromine atom,
$R_3$ and $R_4$ represent a hydrogen atom, an alkyl radical with 1 to 6 carbon atoms, preferably methyl or isopropyl, or an aryl radical with 5 to 12 carbon atoms, preferably phenyl,
n represents an integer of from 4 to 11 and

Ar represents

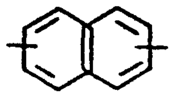 , 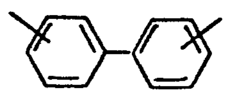 , 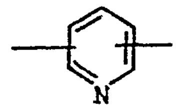 ,

preferably 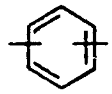

in particular 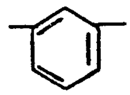 and 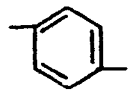

in a molar ratio of from 30:70 to 70:30, more preferably about 1:1, for the production of optical lenses having refractive indices of $n_d>1.6$ for still and cine cameras.

**Revendication**

Utilisation de polyesters aromatiques thermoplastiques de viscositiés relatives $\eta_{rel}$ de 1,18 à 1,42 (mesurées à 25°C dans $CH_2Cl_2$, c = 5 g/l) formés de motifs structuraux de formule:

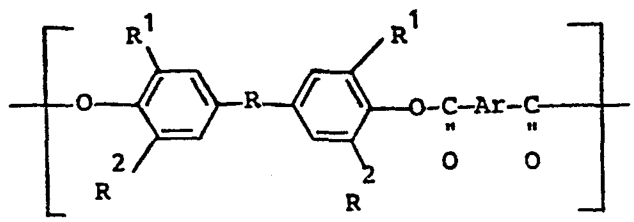

dans laquelle

R est le groupe: 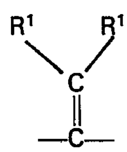

un atome d'oxygène, un groupe carbonyle ou sulfo, une liaison simple, mais de préférence un groupe:

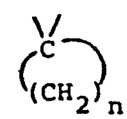

notamment un atome de soufre ou un groupe:

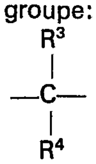

$R^1$, $R^2$ représent un atome de chlore ou un groupe méthyle, de préférence un atome d'hydrogène ou un atome de brome,

$R^3$, $R^4$ représentent un atome d'hydrogène, un reste alkyle ayant 1 à 6 atomes de carbone, de préférence méthyle ou isopropyle ou un reste aryle ayant 5 á 12 atomes de carbone, de préférence phényle,

*n* est un nombre entier ayant une valeur de 4 à 11 et

Ar représente:

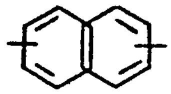 , 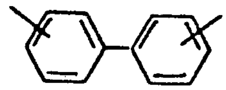 , 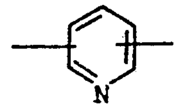 ,

de préférence: 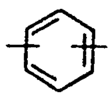

notamment: 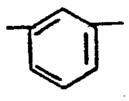 et 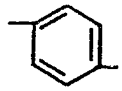

dans la rapport molaire (30—70):(70:30), notamment un rapport d'environ 1:1, pour la production de lentilles optiques d'indices de réfraction $n_d > 1{,}6$ pour appareils photographiques et caméras.